# EUROPEAN PATENT APPLICATION

(11) **EP 1 705 899 A1**
(43) Date of publication of application: **27.09.2006**
(21) Application number: 06005330.3
(22) Date of filing: 15.03.2006
(51) Int. Cl.: H04N 5/225, H04M 1/725

(54) **Information processing apparatus, illegal picture-taking operation preventing method, and illegal picture-taking operation prevention program**

(30) Priority: 24.03.2005 JP 2005087003
(71) Applicant: FUJITSU LIMITED, Kawasaki-shi, Kanagawa 211-8588 (JP)
(72) Inventor: Kamata, Kyoko c/o Fujitsu Limited, Kawasaki-shi, Kanagawa 211-8588 (JP); Shimbo, Izumi c/o Fujitsu Limited, Kawasaki-shi, Kanagawa 211-8588 (JP)
(74) Representative: Sunderland, James Harry

(57) **Abstract**

An apparatus, related method and computer-readable storage medium for preventing illegal picture taking, including an information processing apparatus having a picture-taking function to take a picture of an object on which a wireless IC tag is loaded. A signal-generating unit generates a picture-taking object check signal checking whether the wireless IC tag is loaded on the picture-taking object. A signal transmitting/receiving unit receives a response signal from the wireless IC tag, and the picture-taking function is controlled on the basis of the received response signal.

## Description

### CROSS-REFERENCE TO RELATED APPLICATIONS

This application is related to and claims the benefit of priority to Japanese Patent Application No. 2005-87003, filed March 24, 2005, in Japan, the contents of which are incorporated by reference herein.

### Field of the Invention

The present invention relates to a technique for preventing so-called digital shoplifting which is conducted by storing information within a mobile phone, for example, through picture-taking operations of only the desired part of a book at a bookstore using a mobile phone with a camera having the picture-taking function, and by carrying the picture outside of the bookstore without purchasing the book. Moreover the present invention relates to preventing infringement of portrait right and privacy through illegal picture-taking of a person or the like.

### Description of the Related Art

In recent years, progress of digital cameras and digital video cameras has become outstanding and these cameras are becoming further reduced in size.

Such an information processing apparatus is capable of storing the stationary picture data and dynamic picture data taken with a camera into a personal computer or the like for reproduction and editing and is also transferring such data to the outside of the personal computer by making use of the communication function such as a mail function or the like.

Particularly, it has become common to take pictures and storing/transferring data using a mobile phone with a camera.

Moreover, further improvement has been accomplished for communications with external side in a variety of communications, manipulation ability, and flexibility in use by mounting infrared communication systems and Bluetooth into a mobile phone.

As explained above, taking of picture has become very convenient, but infringement of copyright, portrait right, and privacy of the picture-taking object by illegal picture-taking is now considered a problem.

Exemplary techniques for preventing illegal picture taking have been proposed. For instance, one method includes notifying that a picture has been taken by generating a sound, such as an artificial shutter sound or the like, at the time of picture-taking or generating light using a light emitting substance.

Moreover, Japanese Patent Application No. 2003-179741 discloses an electronic watermark technique in order to prevent illegal copying and falsification of digital data.

The electronic watermark technique is aimed at implementation of check based on an exclusive software by comprising the copyright information or the like into multimedia data such as stationary video data, dynamic video data, and voice data, etc.

Here, the electronic watermark technique enables printing to paper and cloth and, therefore, it is applied not only to protection of copyright but also to simplified access to advertisement and event sites, and to authentication of member cards.

Moreover, Japanese Patent Application No. 2004-23692 discloses a technique to control or prevent a digital picture-taking in an art museum and a music concert by providing a wireless gate at the entrance or the exit of the site and then transmitting and receiving the radio-waves by utilizing a short-distance communication technique such as Bluetooth or the like.

However, the related art explained above has the following problems:

A mobile phone with a camera can notify the taking of pictures to the others by generating the shutter sound or the light when the picture is taken, but a mobile phone is designed at present not to generate high-level sound by taking into consideration noise at the area where taking of picture is not prohibited.

Moreover, since the sound is at a low level and may be ignored in the surrounding noise, expecting psychological suppression effects to a person who is taking a picture, even if the shutter sound or the light is generated when a picture is taken, is an insufficient preventing effect for illegal picture taking, and sufficient prevention cannot be attained unless a staff of a bookstore, for instance, is attending nearby when a book is selected as the picture-taking object.

When a person is selected as the picture-taking object, sufficient preventing effect to illegal taking of picture cannot be attained if a person himself is not aware of such sound or light.

When using the electronic watermark technique, the information for inhibiting picture-taking is immersed into a picture-taking object such as printing matter, digital data or the like. In addition, exclusive software is provided in the information processing apparatus including the picture-taking function of a mobile phone with a camera or the like in order to prevent illegal taking of pictures. However, when a book is determined as the picture-taking object, a sufficient preventing effect cannot be attained unless the electronic watermark technique is applied to all pages of the book.

Illegal picture taking is also an issue where the books have already been put on the racks in the bookstore, such as the existing books and secondhand books. Since the inherent information is immersed at the time of printing in the electronic watermark technique, it is very difficult to apply the electronic watermark technique into the already printed and bound books.

Moreover, it is also very difficult to alter or delete the information in the electronic watermark. Therefore, it is rather difficult to take adequate action to preventillegal taking of pictures when usually prohibited, but allowing picture taking in exceptional circumstances, when official permission has been attained.

For limiting or preventing the digital picture-taking function in an art museum or music concert, a wireless gate at the entrance and exit of such a site transmits and receives the radio-wave utilizing a short-distance communication technique, so that all picture-taking in the controlled space is restricted.

### SUMMARY OF THE INVENTION

The present invention has been proposed considering the problems of the related art explained above and, therefore, an object of the present invention is to provide a method for preventing illegal picture taking of individual picture-taking objects with an information processing apparatus having a picture-taking function.

Moreover, according to embodiments of the present invention, the restrictions of the picture-taking function can be varied for individual picture-taking objects in accordance with the applications and conditions thereof.

In addition, according to embodiments of the present invention, when copyrighted printed matter is selected as the picture-taking object, the present invention can be applied to those objects, even when they are already in the market, in order prevent illegal picture taking.

The information processing apparatus according to embodiments of the present invention includes a picture-taking function and is capable of taking a picture of an object on which a wireless IC tag is loaded. The apparatus comprises a picture-taking object check signal generating unit generating, to the wireless IC tag, a picture-taking object check signal checking whether the picture-taking object exists, when the picture-taking function operates; a signal transmitting/receiving unit receiving a response signal from the wireless IC tag by transmitting the picture-taking object check signal; and a control unit controlling the picture-taking function on the basis of the received response signal.

Moreover, the information processing apparatus according to embodiments of the present invention is characterized in that the control unit inhibits the picture-taking function when the received response signal is a picture-taking action inhibiting signal.

The wireless IC tag according to embodiments of the present invention is a wireless IC tag enabling communication by radio with an information processing apparatus induding a picture-taking function. The apparatus comprises a signal transmitting/receiving unit receiving, from the information processing apparatus, a picture-taking object check signal checking whether a picture-taking object with a wireless IC tag exists or not; and a response signal generating unit generating, for the picture-taking object check signal, a response signal to control operation of the picture-taking action of the information processing apparatus when the picture-taking object check signal is received, whereas the response signal is transmitted to the information processing apparatus from the signal transmitting/receiving unit.

The illegal picture-taking preventing method according to embodiments of the present invention is an illegal picture-taking preventing method for controlling picture-taking of an object on which a wireless IC tag is loaded, comprising a picture-taking function activation step for driving a picture-taking function to take a picture of the object, a picture-taking object check signal step for generating, to the wireless IC tag, a picture-taking object check signal for checking whether a picture-taking object with the wireless IC tag exists or not, a picture-taking object check signal transmitting step for transmitting said picture-taking object check signal, and a control step for controlling the picture-taking function on the basis of a received response signal.

Moreover, the illegal picture-taking preventing program according to embodiments of the present invention is an illegal picture-taking program for controlling picture-taking of an object on which a wireless IC tag is loaded, characterized by controlling a computer to execute a picture-taking drive step for driving a picture-taking function to take a picture of the object, a picture-taking object check signal step for generating, to the wireless IC tag, a picture-taking object check signal to check whether a picture-taking object with a wireless IC tag exists or not when the picture-taking function is driven, a picture-taking object check signal transmitting step for transmitting the picture-taking object check signal, and a control step for controlling the picture-taking function on the basis of a received response signal when the response signal for the picture-taking object check signal is received from the wireless IC tag.

As explained above, the present invention according to embodiments is capable of surely preventing illegal taking of picture using an information processing apparatus having a picture-taking function for individual picture-taking objects.

When the picture-taking object is a book at a bookstore, digital shoplifting using an information processing apparatus having the picture-taking function can surely be prevented. In this case, since the particular printing technique is not required, the present invention may be adapted to the books which are already put on the racks in the bookstore.

Moreover, according to embodiments of the present invention, infringement of portrait right and privacy through illegal taking of picture of persons and leaking of secret information of enterprises by using the information processing apparatus having the picture-taking function can be prevented.

Moreover, flexible measures can be taken to take into consideration the ambient environment and the application conditions, an information processing apparatus having a writer function, thereby making it possible to switch the validation and invalidation for utilization of the illegal picture-taking preventing function to individual picture-taking objects when the rewriting of data is required for the wireless IC tag memory unit.

Moreover, when authentication is to be conducted between an information processing apparatus having the writer function and a wireless IC tag, falsification of data, based on malicious will, from the information processing apparatus having the writer function, and re-writing of data based on erroneous operation from the information processing apparatus having the writer function can be prevented by limiting the information processing apparatus which is capable of re-writing the data, in view of improving reliability of the method of the present invention.

Moreover, according to a method for displaying wording or marks for forbidding picture-taking on the display unit of the information processing apparatus having the picture-taking function, illegal taking of picture may surely be notified and alarmed to a person who has conducted illegal taking of picture carelessly or intentionally. Accordingly, the illegal taking of picture can naturally be prevented. Moreover, an IC tag cannot be removed easily and, therefore, illegal taking of picture can certainly be prevented.

Moreover, cost reduction can also be expected by immersing the wireless IC tags in the book binding stage.

Wireless IC tag can be adapted to newly published books, existing books, and secondhand books and, therefore, the scope of prevention for illegal taking of picture can be extended.

Since the wireless IC tag can be attached not only to the books but also to the objects for which taking of picture is forbidden, such as a new design, the scope of application can further be widened.

Furthermore, when a person, who is requested not to conduct illegal taking of picture, carries a wireless IC tag, as required, illegal taking of picture can be prevented.

The picture-taking function of the information processing apparatus having the picture-taking function can surely be restricted even if a visitor carries the information processing apparatus having the picture-taking function by forming the portable wireless IC tag in a way in which it may be recognized, thereby allowing the visitor, of whom picture taking is forbidden, to enter the region or building in which the taking of pictures is forbidden.

For example, checking for possession of an information processing apparatus having a picture-taking function is no longer required in the places such as the observation areas in a factory, a court of law, a company dealing with the most advanced technology, and a concert hall, or the like, in which the carrying of the information processing apparatus having the picture-taking function is at present prohibited.

Since the application range for restriction of the picture-taking function may be changed by having several kinds of wireless IC tags with different communication distances, the application range can be adjusted, based on the will of an administrator, in accordance with the characteristics of individual picture-taking objects.

Moreover, when a directional antenna is used as an antenna unit of an information processing apparatus having a picture-taking function, if the information processing apparatus having the picture-taking function and an object for which taking of picture is forbidden are provided adjacently, the picture-taking function is prevented only when the direction of camera is set to enable taking of a picture. Accordingly, the picture-taking function is not restricted unnecessarily. Therefore, the scope of the picture-taking function can be widened, and illegal taking of pictures can surely be prevented.

Moreover, according to the method for controlling inhibition of picture-taking in accordance with the distance to the picture-taking object, inhibition of only the zooming function can occur. Thereby, the range of picture-taking can be widened freely without unnecessary inhibition of the picture-taking.

Moreover, according to an embodiment of the present invention, an information processing apparatus including a picture-taking function, capable of taking a picture of an object on which a wireless IC tag is loaded, may comprise a picture-taking object check signal generating unit generating, when the picture-taking function is activated, a picture-taking object check signal checking whether the wireless IC tag is loaded on the picture-taking object; a signal transmitting/receiving unit transmitting a picture-taking object check signal and receiving a response signal from the wireless IC tag; a response time measuring unit measuring a response time between transmission of the picture-taking object check signal and reception of the response signal; a distance calculating unit calculating a distance between the wireless IC tag and the information processing apparatus, on the basis of the response time; and a control unit comparing the distance calculated with the distance calculating unit with a picture-taking action limiting distance of the wireless IC tag, and controllably permitting the picture-taking function when the distance is larger than the picture-taking action limiting distance and controllably inhibiting the picture-taking function when the distance is smaller than the picture-taking action limiting distance.

According to an embodiment of the present invention, an operation of a zooming function may be controllably inhibited when it is decided, in a control unit, that a distance is longer than the picture-taking action limiting distance and a difference between the distance and the picture-taking action limiting distance is smaller than a predetermined threshold value.

Moreover, an embodiment of the present invention provides a method of controlling picture-taking of an object on which a wireless IC tag is loaded, comprising activating a picture-taking function for taking a picture of the object; generating a picture-taking object check signal checking whether the wireless IC tag is loaded on the picture-taking object; transmitting the picture-taking object check signal; measuring a response time between transmission of the picture-taking object check signal and reception of the response signal; calculating a distance between the wireless IC tag and the information processing apparatus on the basis of the response time; and

Comparing the distance with a picture-taking limiting distance of the wireless IC tag and controllably permitting the picture-taking function when the distance is larger than the picture-taking limiting distance, and controllably inhibiting the picture-taking function when the distance is smaller than the picture-taking limiting distance.

According to a method by which an administrator can customize the control and prohibition of picture-taking of certain objects, the inhibition and limitation items can be set individually in accordance with the picture-taking object. In addition, the effects of preventing picture-taking can be alleviated and the foundation of new services can also be constituted.

According to a method by which an administrator can customize the inhibition item of the picture-taking function, restrictions of picture-taking can be granted in accordance with the picture-taking object. For example, in the case where a painted-picture is selected as the object, the flash function can be inhibited.

According to a method by which an administrator customizes the inhibition and limitation items for storage or transfer of the taken pictures, limitation can be granted to treatment of taken pictures in accordance with the picture-taking object, just like the case where the picture-taking itself is permitted but only personal use is allowed, and transfer to another persons is inhibited.

Moreover, according to a method by which an administrator sets the charging information for the picture-taking, if royalty for picture-taking can be collected, the picture-taking action of a person can be permitted.

Moreover, according to a method by which an administrator can grant permission of picture-taking, since the condition to give permission may be considered identical to royalty for picture-taking, the picture-taking action of a person can be permitted as the legal picture-taking action.

Moreover, according to a method by which an administrator can customize the inhibition and limitation items for the number of pictures that can be taken, since restrictions can be given to the number of the picture-taking actions, additional value to the picture-taking object can also be obtained by giving the characteristics such as the limited services for only the limited persons who have arrived first.

These together with other aspects and advantages which will be subsequently apparent, reside in the details of construction and operation as more fully hereinafter described and claimed, reference being had to the accompanying drawings forming a part hereof, wherein like numerals refer to like parts throughout.

### BRIEF DESCRIPTION OF THE DRAWINGS

FIG. 1 is a structural diagram according to an embodiment of the present invention.
FIG. 2 is a structural diagram of a wireless IC tag according to an embodiment of the present invention.
FIG. 3 is a flowchart illustrating the processing operations according to an embodiments of the present invention.
FIG. 4 is a structural diagram of the present invention with the writer function unit.
FIG. 5 is a flowchart illustrating the processing operations of the apparatus having the writer function according to an embodiment of the present invention.
FIG. 6 is a flowchart illustrating the processing operations of the wireless IC tag according to an embodiment of the present invention.
FIG. 7 is a flowchart of the apparatus having the writer function according to an embodiment of the present invention.
FIGS. 8(a) and 8(b) are a flowchart of the processing operations of the wireless IC tag according to an embodiment of the present invention.
FIGS. 9(a) and 9(b) are external views of an embodiment of the present invention in which the wireless IC tag is immersed.
FIGS. 10(a)-10(f) are external views of embodiments of the present invention in which the wireless IC tag is adhered.
FIGS. 11(a) and 11(b) are embodiments of the wireless IC tag in the present invention to be carried.
FIG. 12 is a horizontal cross-section of a mobile phone with a camera according to an embodiment of the present invention.
FIG. 13 is a structural diagram of the mobile phone with camera according to an embodiment of the present invention provided with a directional antenna.
FIGS. 14(a)-14(c) are examples of a wireless IC tag according to embodiments of the present invention which is carried by a person having the mobile phone with a camera.
FIG. 15 is a structural diagram of switching of the limitation contents of the picture-taking function of the mobile phone with a camera according to an embodiment of the present invention.
FIG. 16 is a flowchart illustrating the processing operations of the mobile phone with a camera according to an embodiment of the present invention.
FIG. 17 is a flowchart illustrating the processing operations of the mobile phone with a camera according to an embodiment of the present invention.

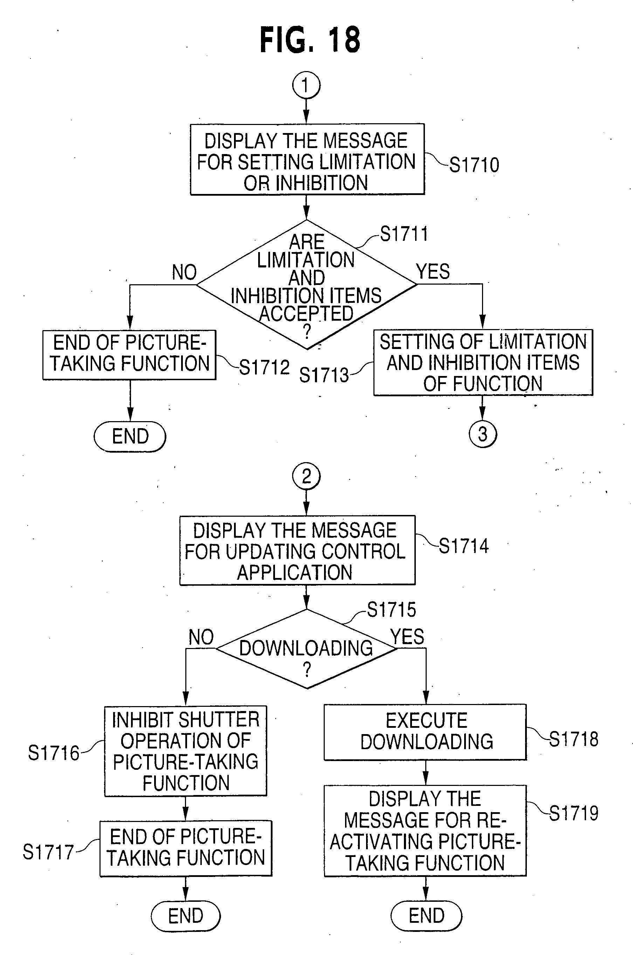

FIG. 18 is a flowchart illustrating the processing operations of the mobile phone with a camera according to an embodiment of the present invention.

### DETAILED. DESCRIPTION OF THE PREFERRED EMBODIMENTS

The preferred embodiments of the present invention will be explained in detail with reference to the accompanying drawings.

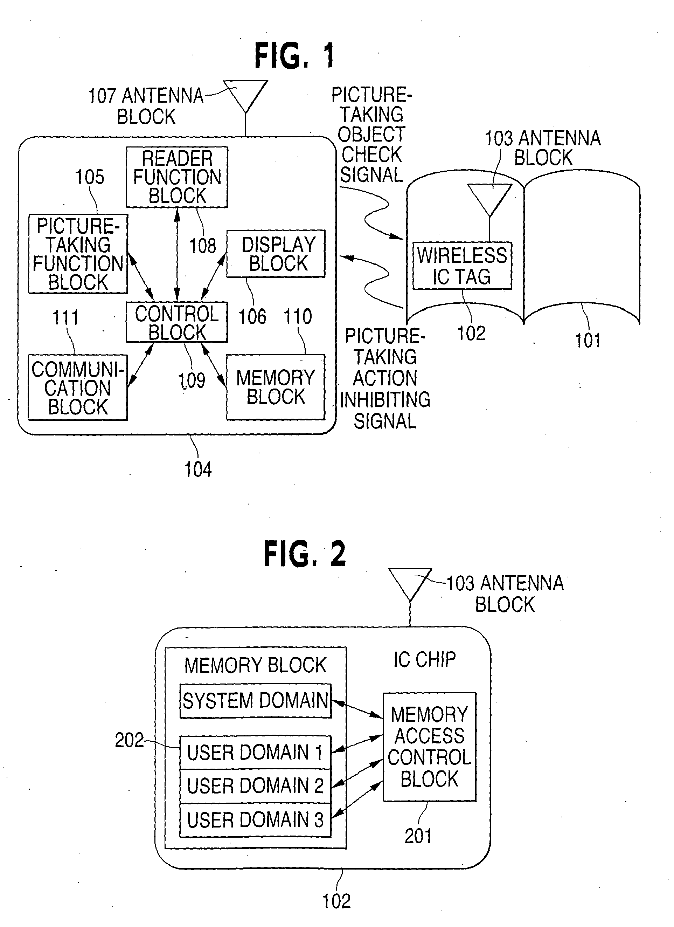

FIG. 1 is a basic structural diagram illustrating an illegal picture-taking preventing method according to an embodiment of the present invention.

The reference numeral 104 denotes an information processing apparatus having a picture-taking function; 101, a picture-taking object; and 102, a wireless IC tag to be attached to the picture-taking object.

The information processing apparatus having the picture-taking function is considered, as an example, a mobile phone with a camera. Hereinafter, the reference numeral 104 denotes a mobile phone with a camera. However, a digital camera is also possible as an embodiment.

In this embodiment, explanations will be made for application of the present invention as a method for preventing illegal picture taking of a book put on the rack as the selling products at a bookstore.

A wireless IC tag 102 including an antenna block 103 for transmitting and receiving the radio-waves is attached on a book 101 as the picture-taking object.

Meanwhile, the mobile phone with camera 104 is constituted with a picture-taking block 105, a display block 106, an antenna block 107 for transmitting and receiving radio-wave to and from the wireless IC tag 102, a reader function block 108 for controlling communication using the radio-waves, a control block for controlling the picture-taking function block 105 and display block 106, a memory block 110 for storing the information of the pictures obtained and the information to generate the picture-taking object check signal.

In this embodiment, the information processing apparatus having the picture-taking function is the mobile phone with a camera 104 comprising a means for making communication with the external side by a communication block 111.

Moreover, the picture-taking object check signal generating block corresponds to the reader function block 108, while the signal transmitting/receiving block, corresponds to the antenna block 107.

FIG. 2 is a detail diagram of the wireless IC tag.

The reference numeral 102 denotes the wireless IC tag for transmitting and receiving radio-waves to and from the mobile phone with a camera 104 using the antenna block 103. The wireless IC tag 102 includes a memory access control block 201 and a memory block 202. The memory access control block 201 is capable of accessing a system domain, a user domain 1, a user domain 2 and a user domain 3 provided within the memory block. Here, the system domain stores the information indicating the functions of the wireless IC tag 102 and the user domains 1 to 3 are capable of storing personal information, or the like, of respective users.

Moreover, the response signal generating block forming the wireless IC tag described in the claims is provided within the memory access control block 201.

Next, each processing operation in each block of the mobile phone with a camera 104 used in the illegal picture-taking preventing method constituted as explained above will be explained.

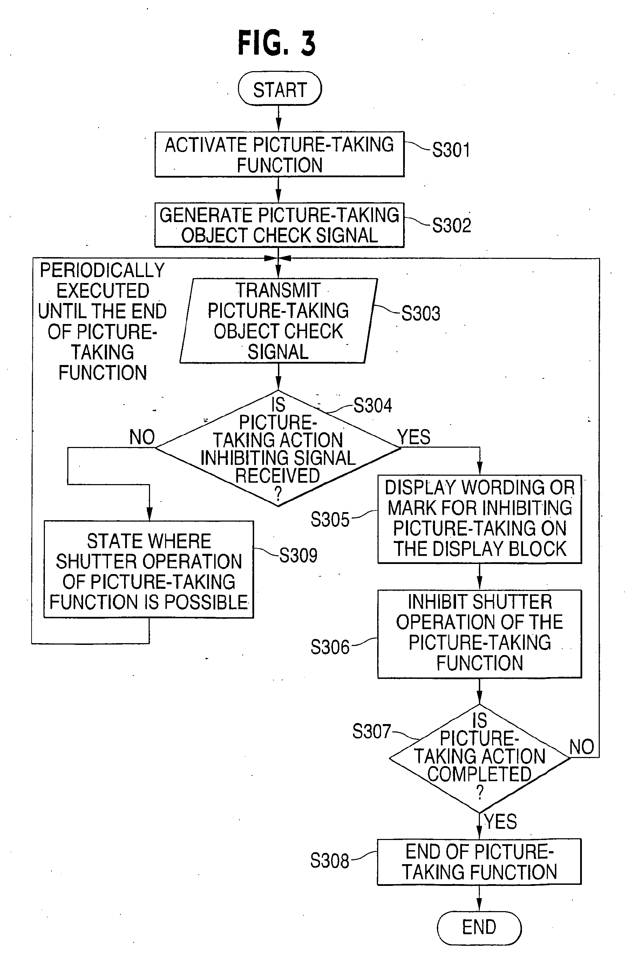

FIG. 3 is a flowchart illustrating the functions of the present invention, according to an embodiment of the present invention.

The mobile phone with a camera 104 drives the picture-taking function block 105 (step S301)

The reader function block 108 having obtained the information to generate the picture-taking object check signal from the memory block 110 via the control block 109, generates the picture-taking object check signal (step S302).

The antenna block 107 transmits the radio-waves (step S303) and also enters the waiting condition for reception of the picture-taking action inhibiting signal as the response from the wireless IC tag 102 attached to a picture-taking object 101 (step S304).

Transmission of the picture-taking object check signal is accomplished periodically until the picture-taking function is completed.

The mobile phone with a camera 104 moves into the radio-wave transmission and reception allowable area of the wireless IC tag 102 in order to take a picture of the picture-taking object 101 and drives the picture-taking function block 105, or moves into the radio-wave transmission and reception allowable area of the wireless IC tag 12 while the picture-taking function block 105 is driven. In this case, upon reception of the picture-taking object check signal by the antenna block 103 of the wireless IC tag 102, this wireless IC tag 102 is operated with an electromotive force and generates the picture-taking action inhibiting signal. Accordingly, when the picture-taking action inhibiting signal is received, the antenna block 107 of the mobile phone with a camera 104 transfers the signal converted via the reader function block 108 from the antenna block 107 to the control block 109, and the control block 109 having received this converted signal inhibits the shutter operation of the picture-taking function block 105 (step S306).

In the case where the information processing apparatus 104 having the picture-taking function is provided with the display block 106, the wording or the picture-taking inhibiting mark indicating that taking of picture is inhibited is displayed or both wording and mark are displayed (step S305). Thereafter, the shutter operation is inhibited (step S306).

The condition in which the shutter operation is inhibited is cancelled when the picture-taking function is completed (step S308) or when the information processing apparatus 104 having the picture-taking function moves to the outside of the radio-wave transmission and reception allowable area of the wireless IC tag 102 and the response of the picture-taking object check signal is not received within the predetermined period (step S309).

As the method of attaching the wireless IC tag, it may be immersed within a book or adhered on a book.

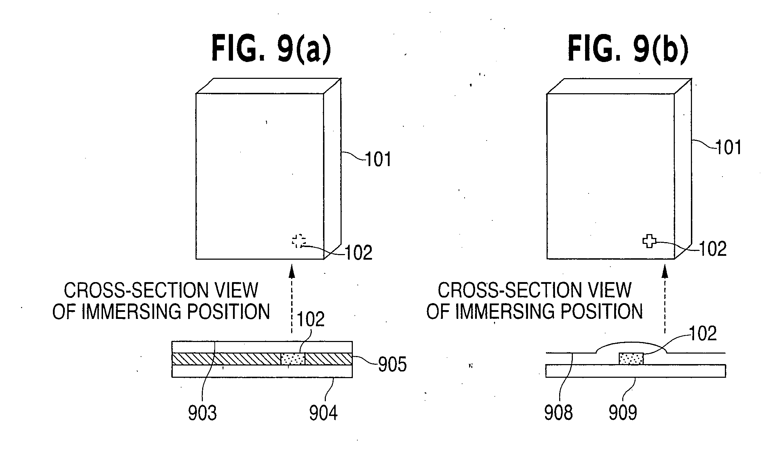

As an example of the immersed wireless IC tag, this IC tag may be immersed with the following processes. Namely, the wireless IC tag 102 is placed on a cover 904 of a book and a sheet 903 is adhered using a bonding agent 905 over the IC tag on the binding as illustrated in FIG. 9(a). Otherwise, as illustrated in FIG. 9(b), the wireless IC tag 102 is placed on the sheet 908 and the tag is then covered with a coating sheet 909 such as a vinyl sheet on the binding.

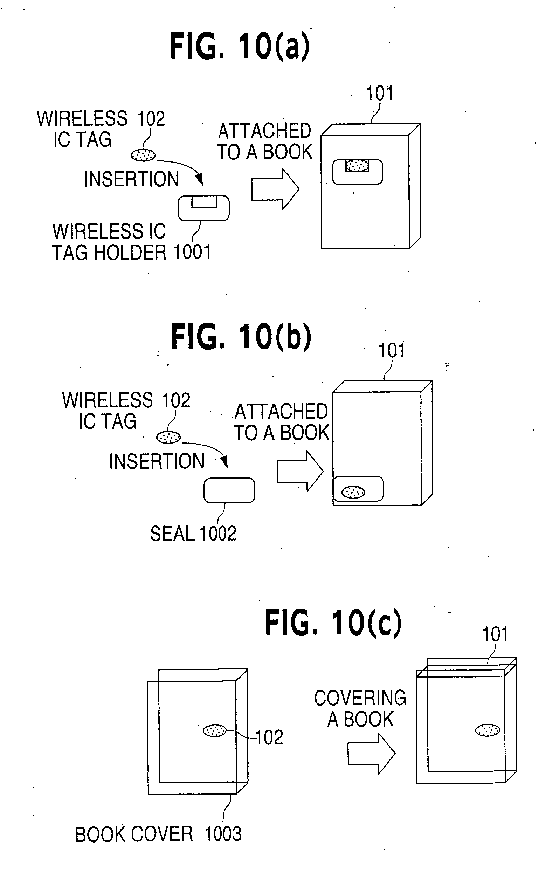

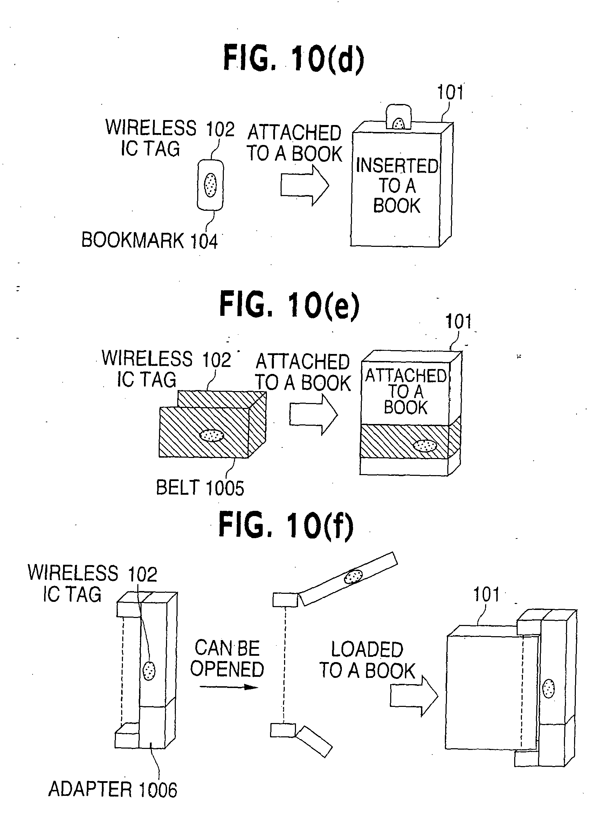

FIGS. 10(a)-10(f) illustrates examples of adhesion of the wireless IC tag.

As illustrated in FIG. 10(a), the wireless IC tag 102 may be formed as the holder type. In this case, the wireless IC tag 102 is inserted into the wireless IC tag holder 1001 having a bag type region for insertion of the IC tag and a bonding surface for sticking to a book and this holder 1001 is adhered to the book 101.

Moreover, as illustrated in FIG. 10(b), the wireless IC tag may be formed as a seal. In this case, the wireless IC tag 102 is adhered to the book 101 using a bonding seal 1002 such as a price tag or a cellophane tape.

Moreover, as illustrated in FIG. 10(c), the wireless IC tag may be formed as a book-cover. In this case, the wireless IC tag 102 is adhered to a book-cover 1003 for covering the book 101.

Moreover, as illustrated in FIG. 10(d), the wireless IC tag 102 may be formed as a bookmark. In this case, the wireless IC tag 102 is adhered to the bookmark 1004.

Moreover, as illustrated in FIG. 10(e), the wireless IC tag 102 may be formed as a belt. In this case, the wireless IC tag 102 is adhered to the belt 1005 to be loaded to the book.

Moreover, as illustrated in FIG. 10(f), the wireless IC tag 102 may be formed as an adapter. In this case, the wireless IC tag 102 is inserted into the adapter 1006 which is loaded to the book.

In the case where the wireless IC tag is immersed into a book, this IC tag can be removed easily from the book. In the case where the wireless IC tag is adhered to a book, reuse of the wireless IC tag becomes possible by collecting the used wireless IC tag.

Here, the scope of effective use of the illegal picture-taking preventing function may be changed for individual books, for example, by preparing for several kinds of wireless IC tags such as a passive type wireless IC tag and an active type wireless IC tag and then changing the wireless IC tag to be adhered in accordance with the characteristic of the book.

In this embodiment, a wireless IC tag has been explained as the device to be applicable to the illegal picture-taking preventing function for individual books at a bookstore. However, the wireless IC tag is also capable of introducing the following profiles.

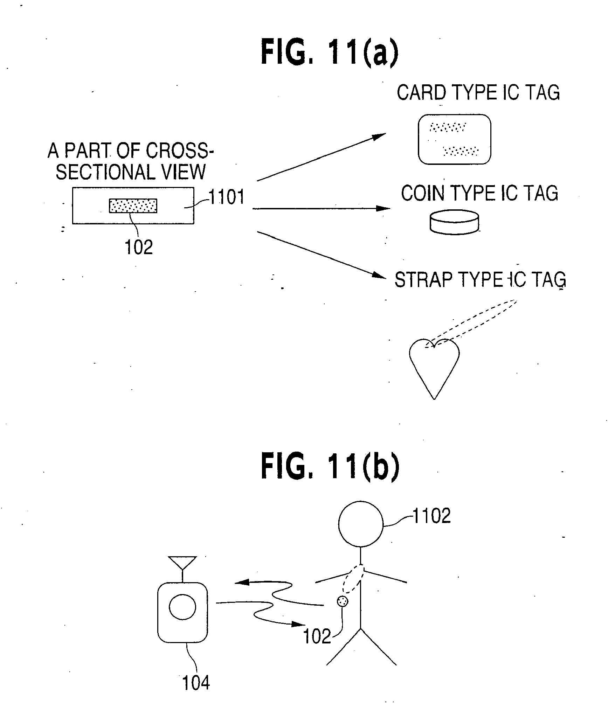

As illustrated in FIG. 11(a), the wireless IC tag 102 may be formed as a portable type tag such as a card type, coin type, and a strap type in which the tag is coated with resin 1101.

As illustrated in FIG. 11 (b), the wireless IC tag 102 may be formed as a portable tag which can be carried by a person 1102. Thereby, illegal picture-taking by a person can also be prevented. In this case, the wireless IC tag 102 may be formed in any shape which can be carried by a person.

Moreover, as the antenna block 107 of the mobile phone with a camera 104, a directional antenna may be provided. In the case of this structure, the receiving direction of the picture-taking action preventing signal can be limited.

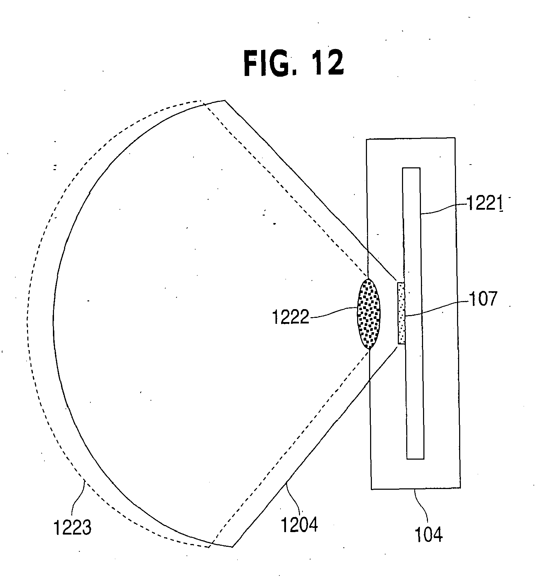

FIG. 12 is an embodiment in which a directional antenna is used as the antenna block 107. A directional antenna 107 is installed to the base 1221 of the mobile phone with a camera 104 so that the direction of the picture-taking allowable domain 1223 of a camera 1222 as the picture-taking function block of the mobile phone with a camera 104 is matched with the direction of the communication domain 1204 of the antenna

The camera as the picture-taking block of the mobile phone with a camera 104 has inherent picture-taking allowable direction and therefore the camera direction must be changed for taking a picture of the object existing at the outside of the scope of the picture-taking allowable area.

In the information processing apparatus having the picture-taking function, the picture-taking direction of a camera is matched with the radio-wave transmission and reception allowable direction of the directional antenna.

A certain kind of apparatus is provided with a camera block which can change the picture-taking direction or with a plurality of camera blocks. When the camera block is capable of changing the picture-taking direction, the antenna block is capable of changing the direction in conjunction with the camera block. In the case that a plurality of camera blocks are used through the switching operation, a plurality of antenna blocks are provided and the antenna to be used is switched in conjunction with the switching of the camera block.

Accordingly, it is possible that the picture-taking action is inhibited only when the direction of the picture-taking object is matched with the direction of the camera for taking a picture.

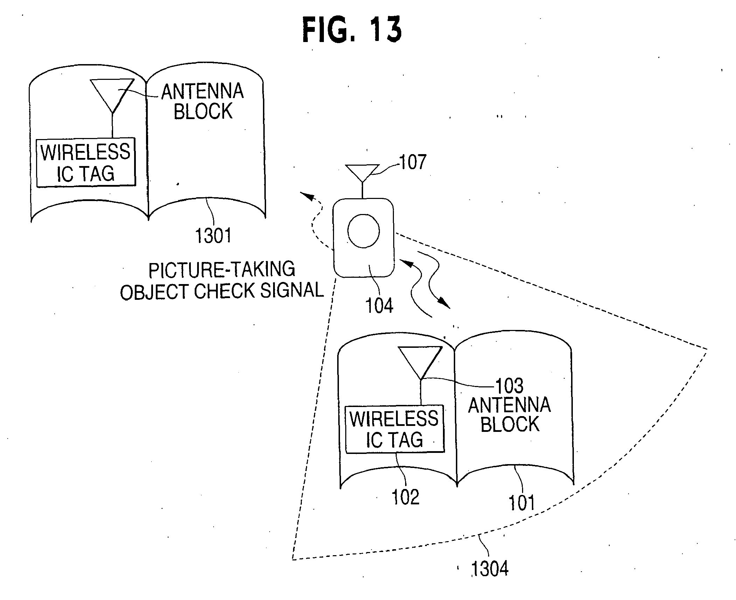

Therefore, the picture-taking object check signal and the picture-taking action inhibiting signal can be transmitted and received only to and from the picture-taking object 101 existing in the communication allowable area 1304 of the mobile phone with a camera 104 as illustrated in FIG. 13. Accordingly, picture-taking of only the picture-taking object 101 is inhibited. The picture-taking object 1301 does not exist within the communication allowable area 1304 and therefore it is possible to execute the picture-taking action to this picture-taking object.

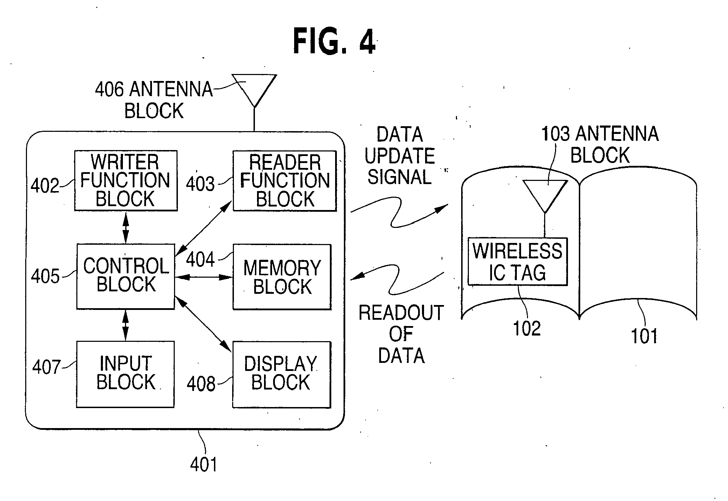

FIG. 4 is a structural diagram of the information processing apparatus which is capable of canceling the illegal picture-taking preventing function of the present invention.

In the following explanation of this embodiment, the present invention is adapted to cancel the illegal picture-taking preventing function because a book as the picture-taking object is purchased at a bookstore and because official taking of pictures is allowed in such a case that an administrator of the bookstore intentionally takes pictures of books for the management purpose of books.

The information processing apparatus 401 having the writer function for updating the data of the wireless IC tag memory block is formed of a writer function block 402 for updating the data in the wireless IC tag memory block, a reader function block 403 for reading out the information from the wireless IC tag, a memory block 404 for storing the information used for update of data, a control block 405 for controlling each function block, an antenna block 406 for transmitting and receiving radio-waves, an input block 407 for receiving the input information from the external side, and a display block 408 for displaying the processing results.

Structure of the wireless IC tag of another picture-taking object 101 is identical to the structure explained for the illegal picture-taking preventing method explained above.

A data update signal generating block described in the additional notes corresponds to the writer function block 402.

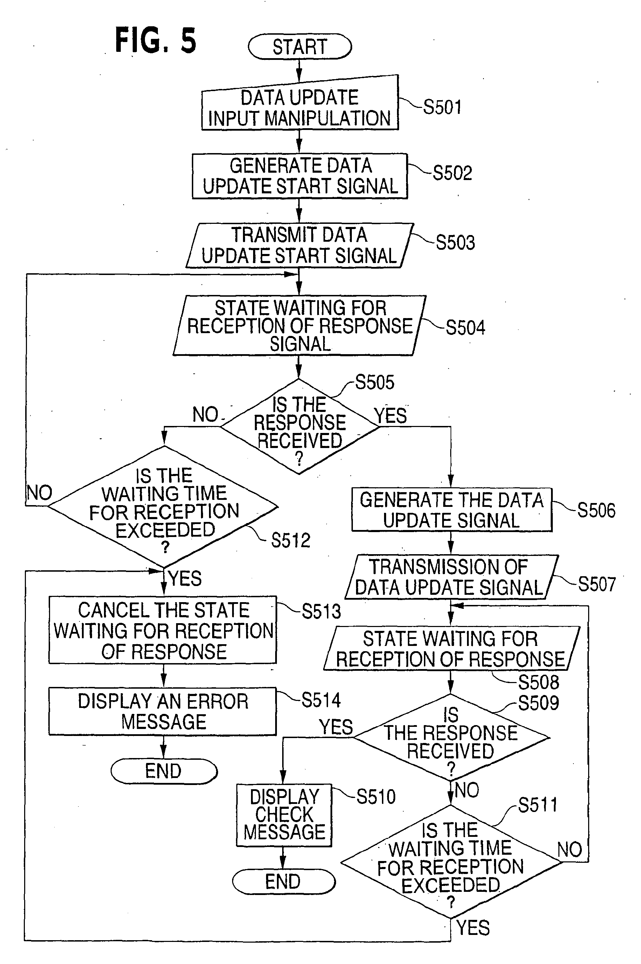

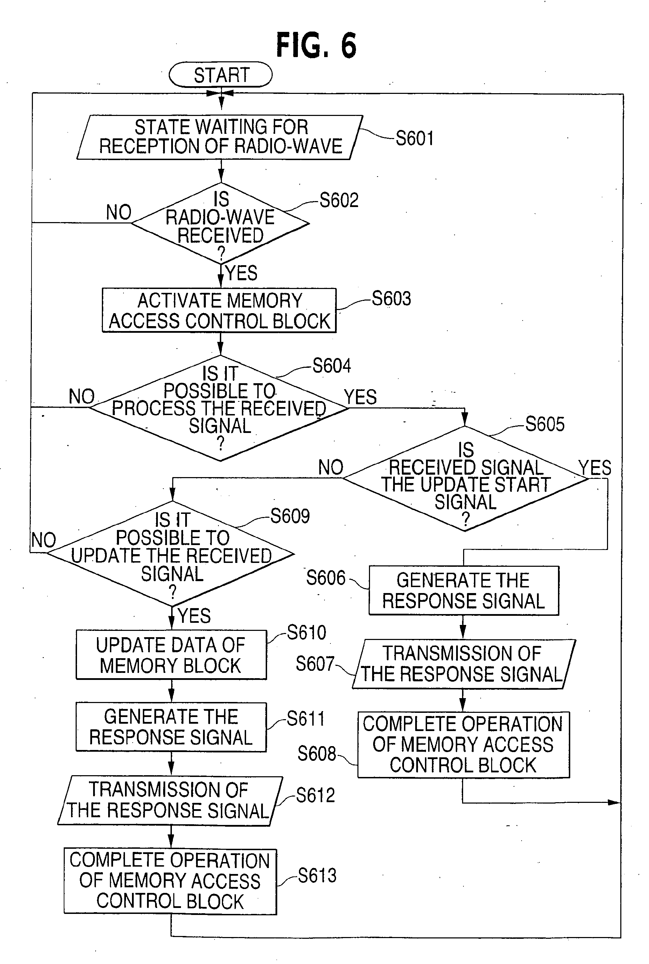

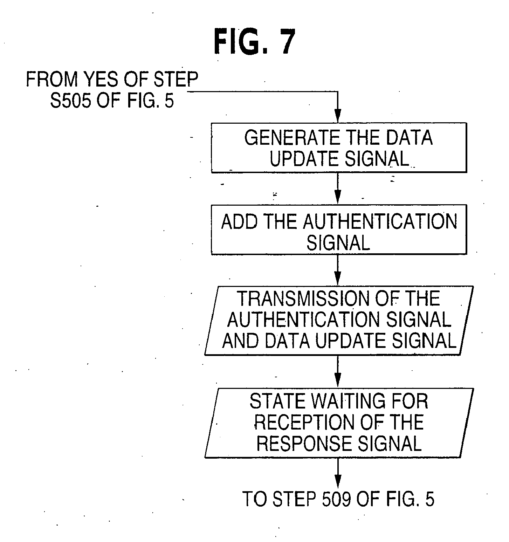

Next, the processing operations of each block of the information processing apparatus 402 including the writer function in the structure explained above will be explained with reference to the flowcharts of FIG. 5 and FIG. 6.

The memory block 404 of the information processing apparatus 401 having the writer function is assumed to previously store the information which is referred for updating of data to the user domain of memory block 414 of the wireless IC tag 102.

At the time of canceling the illegal picture-taking preventing function to the picture-taking object 101, an administrator brings the picture-taking object 101 near the information processing apparatus 401 having the writer function and activates the reader function block 403 via the control block 405 by manipulating the input block 207 of the information processing apparatus having the writer function (step S501).

Accordingly, the reader function block 403 generates the update start signal (step S502), transmits the update start signal from the antenna block 406 (step S503), and then enters the waiting state for reception of the response signal from the wireless IC tag 102 adhered to the picture-taking object 101 (step S504).

Whether the antenna block 406 has received the response from the picture-taking object 101 or not is decided (step S505). If the response is not received from the picture-taking object 101 within the constant period (step S512), the response waiting state is canceled (step S513) and an error message is displayed on the display block, indicating that the wireless IC tag as the update object does not exist within the immediately adjacent area (step S514).

When the antenna block 406 receives the response signal from the picture-taking object 101 (step S505) and the antenna block 406 receives the response from the wireless IC tag 102, the writer function block 202, having obtained the information from the memory block 404 via the control block 405, generates the data update signal for canceling the function (step S506), transmits the radio-wave from the antenna block 206 (step S507) and enters the waiting state for reception of the response from the wireless IC tag (step S508).

The writer function block 202 decides whether the response signal is received from the antenna block 406 (step S509). When the response signal is received, the writer function block 202 completes the operation after displaying that the update of data of the wireless IC tag has been completed normally (step S510).

If the writer function block 202 does not receive the response signal from the antenna block 406 for the constant period, it cancels the waiting state for reception of response (step S513) and displays, to the display block, an error message indicating that the wireless IC tag as the update object does not exist in the immediately adjacent area (step S514).

Accordingly, data in the wireless IC tag is updated and the illegal picture-taking preventing function can be canceled.

On the other hand, the wireless IC tag 102 decides, from the initial radio-wave receiving condition (step S601 whether the antenna block 103 has received the data update signal for canceling the function (step S602). When the data update signal for canceling the function is received, the memory access control block 201 is driven (step S603) to analyze the received signal (step S604).

Whether the received signal is the update start signal or not is decided (step S605). When the received signal is the update start signal, the response signal is generated (step S606) and this signal is then transmitted (step S607).

If the received signal is not the update start signal and the update signal (step S609), the data in the user domain 202 of memory block is updated (step S610). After generation (step S611) and transmission (step S612) of the response signal, the memory access control block is completed (step S613) and the radio-wave receiving state starts (step S601).

Moreover, in another embodiment wherein the structure similar to that of FIG. 4 is used, the illegal picture-taking preventing function can be validated again.

Such an embodiment can be utilized when it is requested to validate again the illegal picture-taking preventing function, for example, at the bookstore selling the books because a book as the picture-taking object is returned from a purchaser and when the illegal picture-taking preventing function is validated again after a picture of the relevant book is intentionally obtained.

To the memory block 404 of the information processing apparatus 402 having the writer function, the update operation mode information such as the destination to be referred by the update information or the like in the validation mode and invalidation mode for deciding the information to be referred for memory update operation and the information to be referred for update of data to the memory block 202 of the wireless IC tag 102 are stored previously.

Here, the validation mode is the operation mode wherein the illegal picture-taking preventing function is valid, while the invalidation mode is the operation mode wherein the illegal picture-taking preventing function is invalid.

The update operation mode information explained above may be updated with manipulation from the input block 407 and this information initially sets the invalidation mode.

For validation of the illegal picture-taking preventing function to the picture-taking object 101, an administrator activates the reader function block 403 via the control block 405 by bringing the picture-taking object 101 near the information processing apparatus having the writer function 401 and then manipulating the input block 407 of the information processing apparatus 401 having the writer function.

Accordingly, the reader function block 403 transmits the radio-waves from the antenna block 406 and also enters the state waiting for reception of a response from the wireless IC tag 401 adhered to the picture-taking object 101. When the antenna block 406 does not receive the response from the picture-taking object 101 within the constant time period, the waiting state for reception of the response is canceled.

When the antenna block 406 receives the response from the wireless IC tag 102 within the constant time period, the writer function block 402 obtains the destination to be referred by the update information in the validation mode from the memory block 404 via the control block 405, then generates the data update signal for validating the function and transmits this signal from the antenna block 406.

Accordingly, the antenna block 103 of the wireless IC tag 102 receives the data update signal for validating the function and the memory access control block 201 updates the data of the memory block 202 in order to validate the illegal picture-taking preventing function.

The update operation mode information can be updated and the operation mode can also be switched with manipulation from the input block 407.

Moreover, according to another embodiment, authentication is performed between the wireless IC tag 102 and the information processing apparatus 401 having the writer function at the time of updating the data in the wireless IC tag from the information processing apparatus 401 having the writer function illustrated in FIG. 4.

When the authentication is successful, the data in the wireless IC tag memory block is updated. Accordingly, the updating of data of the wireless IC tag memory block is validated only from the information processing apparatus having the official writer function and an update from the information processing apparatus having illegal writer function is invalided.

Here, any authentication method is permitted for the authentication explained above. The authentication signal is added to the data update signal used in the method for canceling the illegal picture-taking preventing function and validating again the same function.

An embodiment in which the authentication signal is used will be explained below with reference to the structural diagram of FIG. 4, detail diagram of the wireless IC tag of FIG. 2 and partial flowchart of FIG. 7.

A common authentication key used for verifying legitimacy of the writer at the time of updating the data of the memory block 202 is stored in the memory block 404 of the information processing apparatus 401 having the writer function and the leading (first) domain of the memory block 202 of the wireless IC tag 102.

Manipulation conducted by an administrator for updating the data in the wireless IC tag 102 is similar to that required for the method for canceling the illegal picture-taking preventing function and for validating again the same function. However, when the antenna block 406 receives the response signal from the wireless IC tag 102 after transmission of the data update signal from the apparatus 201 including the writer function block, this writer function block 402 having obtained the information from the memory block 404 via the control block 405 generates the data update signal for canceling the function (step S706). Moreover, after the authentication key is obtained from the memory block 404 and it is then added to the data update signal (step S707), the writer function block 402 enters the waiting state for reception of the response from the wireless IC tag after transmitting the radio-waves from the antenna block 406 (step S708).

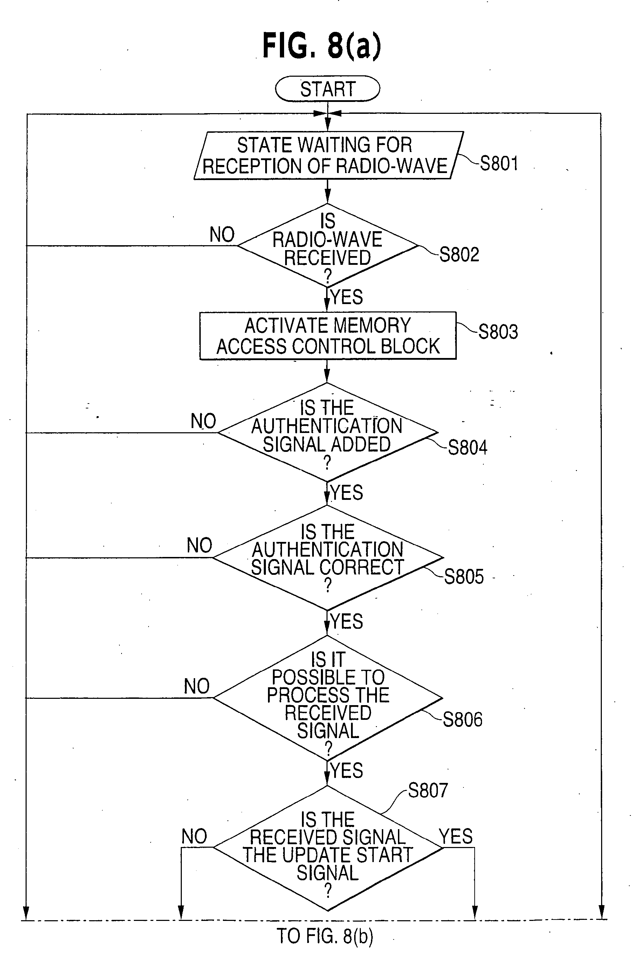

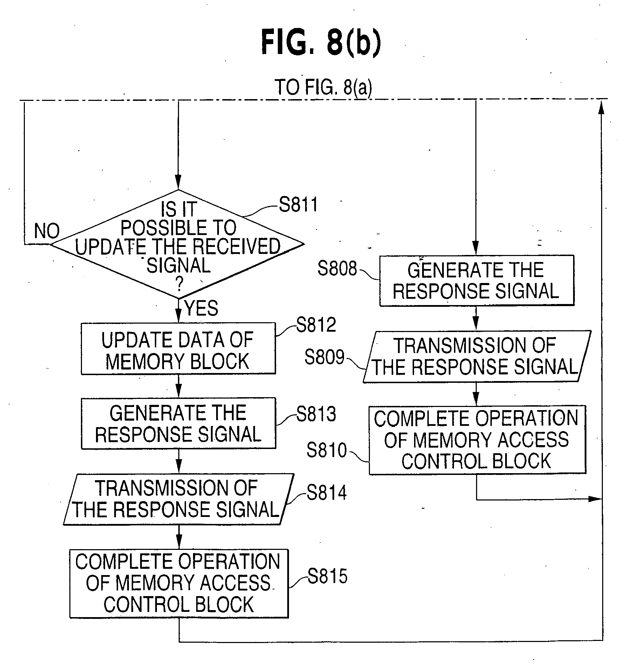

FIGS. 8(a) and 8(b) are a flowchart illustrating the processing operation of the wireless IC tag.

The wireless IC tag 102 decides, from the initial radio-wave receiving condition (step S801),whether the antenna block 103 has received the data update signal for canceling the function (step S802). When the data update signal for canceling the function is received, the memory access control block 201 is activated (step S803) and it is decided whether the authentication signal is added or not to the received signal (step S804).

If the authentication signal is not added, the signal is determined not to be the legitimate signal from the writer function block. Thereby, the receiving signal is abandoned and the radio-wave receiving state starts again (step S801).

When the authentication signal is added, whether the authentication signal is right or not is decided by referring to the authentication key from the memory block 202 via the memory access control block 201 (step S805).

When the authentication signal is right, a part of the signal after the authentication signal is removed is further analyzed (step S806) to decide whether it is the update start signal or not (step S807).

When the signal is the update start signal, the response signal is generated (step S808) and this response signal is transmitted (step S809). Thereafter, the functions of the memory access control block 201 are completed (step S810) and the radio-wave receiving state, starts (step S801).

If the received signal is not the update start signal, it is determined whether the signal is the update signal or not (step S811) When the signal is the update signal, the data in the memory block 202 is updated via the memory access control block 201 (step S812). Moreover, the response signal is generated (step S813) and this response signal is transmitted (step S814). Thereafter, the memory access control block 201 is completed (step S815) and the radio-wave receiving state starts again (step S801).

The writer function block 202 having received the response signal from the antenna block 206 is completed after displaying the normal end of the updating of data of the wireless IC tag on the display block. Thereby, updating of data of the wireless IC tag can be realized only from the apparatus having the legitimate writer function including the authentication key.

The wireless IC tag 102 is designed in the shape which may be portable and can also be recognized from the external side when it is carried. This wireless IC tag is carried by a person who is restricted in the picture-taking action within the area and building in which taking of pictures is inhibited.

The picture-taking object check signal and picture-taking inhibiting signal are transmitted and received between the wireless IC tag 102 and the information processing apparatus 104 having the picture-taking function 104 in the same manner as those in the illegal picture-taking preventing method.

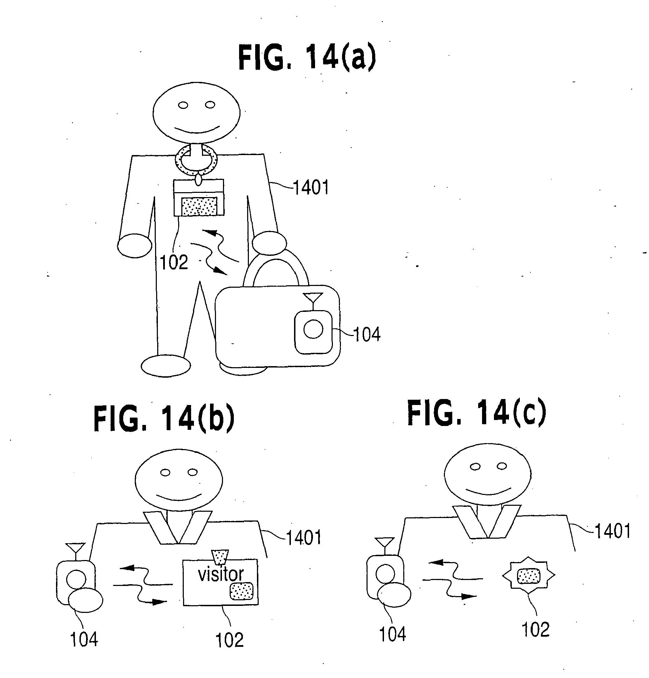

FIG. 14(a) illustrates an embodiment where a card-holder type wireless IC tag is used. FIG. 14(b) illustrates an embodiment where a card type tag is used, and FIG. 14(c) illustrates an embodiment where a badge type tag is used.

Any type of wireless IC tag may be used so long as it can be carried by a person and carrying of tag can be recognized from the external side.

First, the card holder type wireless IC tag illustrated in FIG. 14(a) will be explained.

Here, it is assumed that a person 1401, who is entering the area where taking of picture is inhibited, carries the information processing apparatus having the picture-taking function 104 by storing it within his own bag.

When the person enters the area or building, he receives, at the entrance, a card holder type wireless IC tag 102 and is requested to carry the tag by hanging from his neck after a visitor card is inserted thereto while he is staying at the area. Accordingly, illegal picture-taking preventing action from the information processing apparatus having the picture-taking function 104 carried by the same person (visitor) 1401 can be prevented even when a check is not conducted for the contents of the bag.

When the visitor leaves the area or building, the visitor returns the visitor card and the card holder type wireless IC tag 102.

Next, the card type wireless IC tag illustrated in FIG. 14(b) will be explained.

The information processing apparatus 104 having the picture-taking function is stored within the bag carried by a person 1401 entering the area where picture-taking is prohibited. When the person enters the area, he receives, at the entrance, a card type wireless IC tag 102 and he is also requested to wear the card type wireless IC tag 102 while he is staying at the area. Accordingly, illegal picture-taking action from the information processing apparatus having the picture-taking function 104 carried by the person 1401 can be prevented even if the check is not performed for the contents of bag.

When the visitor leaves the area or building, the person returns the wireless IC tag 102. Thereby, the person (visitor) can utilize again the picture-taking function of the information processing apparatus 104.

Next, the badge type wireless IC tag illustrated in FIG. 14(c) will be explained.

Here, it is assumed that a person (visitor) 1401 entering the area where taking of picture is inhibited carries a bag in which the information processing apparatus 104 having the picture-taking function is stored.

When the person enters the area, he receives, at the entrance, a badge type wireless IC tag 102 and he is also requested to hang the tag from his neck while he is staying at the area after a visitor card is inserted to the badge. Accordingly, the illegal picture-taking function from the information processing apparatus 104 having the picture-taking function carried by the visitor 1401 can be prevented without a check for the contents of the bag.

When the person leaves the area, he returns the badge type wireless IC tag 102. Thereby, the person (visitor) can utilize again the picture-taking function of the information processing apparatus 104.

Next, the method for inhibiting picture-taking, or only the zooming, in accordance with the distance between the mobile phone with a camera and the picture-taking object will be explained.

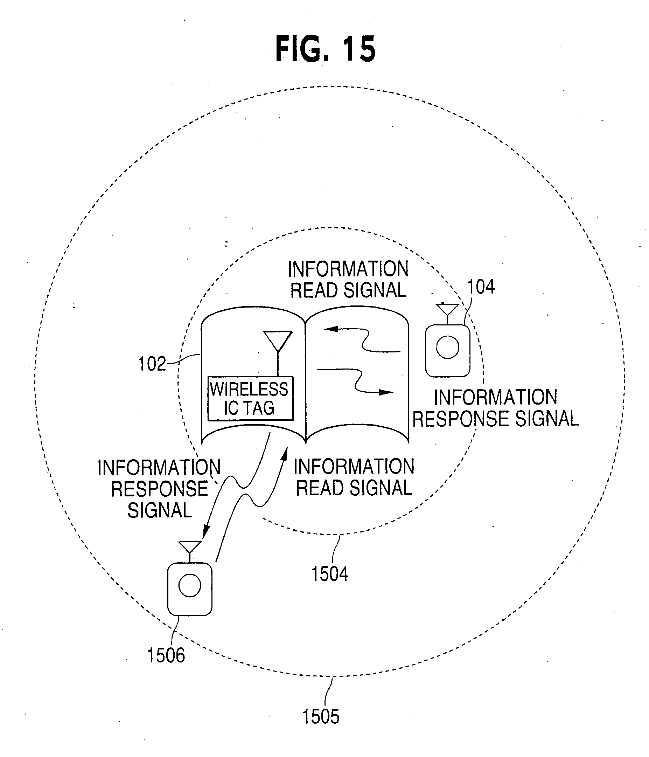

FIG. 15 is a structural diagram in relation to an embodiment of the present invention.

As the distance between the wireless IC tag of the picture-taking object and the mobile phone with a camera increases, the transmitting and receiving time of the signal used for communication between the wireless IC tag and the information processing apparatus having the picture-taking function increases.

When the time required for transmission and reception is rather short, the distance is also short and when the time is rather longer, the distance is longer. The administrator of the picture-taking object previously sets a value of this transmitting/receiving time corresponding to a certain distance to the wireless IC tag as a switching time for inhibiting the picture-taking action and for inhibiting the zooming (hereinafter, referred to as switching threshold value).

Here, the switching threshold value is decided by measurement by previous experiments or the like.

The wireless IC tag is also provided with a domain for storing the switching threshold value and is capable of performing a function of sending the information response signal as the signal for returning a value of this storage domain when the information read signal is received as the signal for reading the contents of this storage domain. The mobile phone with a camera performs the function of transmitting the information read signal and receiving the information response signal, and the function of measuring the time required for transmission and reception of the information read signal and information response signal, and thereby decides the distance and inhibits the picture-taking action by comparing such measured value with the value of the switching threshold value information of the relevant wireless IC tag obtained from the information read signal.

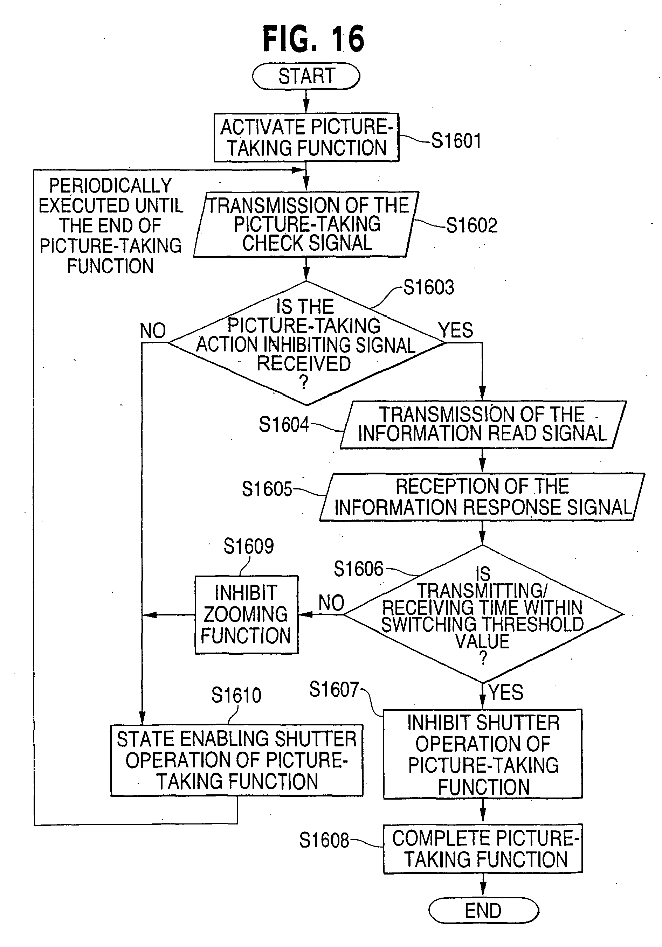

FIG. 16 is a flowchart of the operations in the control block of the mobile phone with a camera.

In FIG. 15, when the wireless IC tag 102 has the inherent radio-wave transmitting/receiving area 1505 and the switching threshold value preset by the administrator to the wireless IC tag 102 has the limited range 1504., the information processing apparatus having the picture-taking function 104 comes close to the picture-taking object and activates the picture-taking function after it has entered the limited range 1504 of the switching threshold value.

In this case, the control block of the mobile phone with a camera 104 activates the picture-taking function (step S1601 transmits the picture-taking object check signal (step S1602), and decides whether it has received or not the picture-taking action inhibiting signal (step S1603).

When it is decided that the control block received the picture-taking action inhibiting signal, it transmits the information read signal to the picture-taking object (step S1604) and activates a timer for measuring the time until the response is received.

Upon reception of the information response signal from the wireless IC tag 102 (step S1605), the control block stops the timer and obtains the transmitting/receiving time.

Here, it is decided whether the measured time is within the switching threshold value obtained from the information response signal (step S1606).

When it is decided whether the measured time is within the switching threshold value obtained from the information response signal, it means that the mobile phone with a camera 104 exists in the immediately adjacent area, the control block executes the process to inhibit the picture-taking function itself (step S1607) and completes the picture-taking function (step S1608).

Meanwhile, the mobile phone with a camera 104 activates the picture-taking function under the condition that it is far from the picture-taking object and exists in the outside of the switching threshold value range 1504 (step S1601)

The control block of the mobile phone with camera 1506 also measures the transmittinglreceiving time as explained above for the comparison with the switching threshold value. In this case, since the measured time is longer than the switching threshold value, the control block enables picture-taking action (step S161 0) under the condition that the zooming function is inhibited (step S1609).

Next, the method for individually customizing the limitation and inhibition of the picture-taking function from the information processing apparatus having the picture-taking function when the administrator of the wireless IC tag writes the desired limitation/inhibition items into the wireless IC tag will be explained.

The wireless IC tag is provided with a customizing information storage domain and performs a function of returning the information response signal as the signal to return the value of this storage domain when the information read signal for reading contents of this storage domain is received.

The mobile phone with a camera also performs a function of transmitting the information read signal and receiving the information response signal, and is moreover provided with a function to implement analysis and control of the limitation and inhibition data corresponding to the customizing information.

A control application for implementing analysis and control of the limitation and inhibition data corresponding to the customizing information may be previously set to the information processing apparatus having the picture-taking function or may be set with the downloading on the basis of a communication means.

Moreover, an input block is further provided to the information processing apparatus having the picture-taking function and a function for downloading the control application corresponding to the customizing information in the timing of the implementation of the picture-taking action is also provided thereto. Accordingly, in such a control application, it is possible to inquire, to a user of the information processing apparatus having the picture-taking function, regarding acceptance of the limitation and inhibition items and selection of a control method when a plurality of methods are prepared by utilizing the display block and the input block.

The administrator of the wireless IC tag previously sets the desired limitation and inhibition items to the wireless IC tag. Any type of setting contents may be used. For example, in a certain setting method, the "Number:lnhibiting Information" such as "0001 :ON", "0002:OFF" may be set.

In this setting method, when the administrator decides that the number 0001 is set, for example, as the information about use of flash for taking a picture (ON: flash is inhibited, while OFF: flash is permitted) and the number 0002 is set as the information about storage of the picture-taking data (ON: storage is inhibited, while OFF: storage is permitted), control becomes possible by equivalently setting this number as the control application to be loaded to the information processing apparatus having the picture-taking function.

When a new limitation item is found, the administrator sets a new number of such an item to the wireless IC tag. Thereby, the-information which cannot be controlled with the present control application can be detected when the information is read with the information processing apparatus having the picture-taking function. Accordingly, it can be decided that downloading of the new control application is necessary.

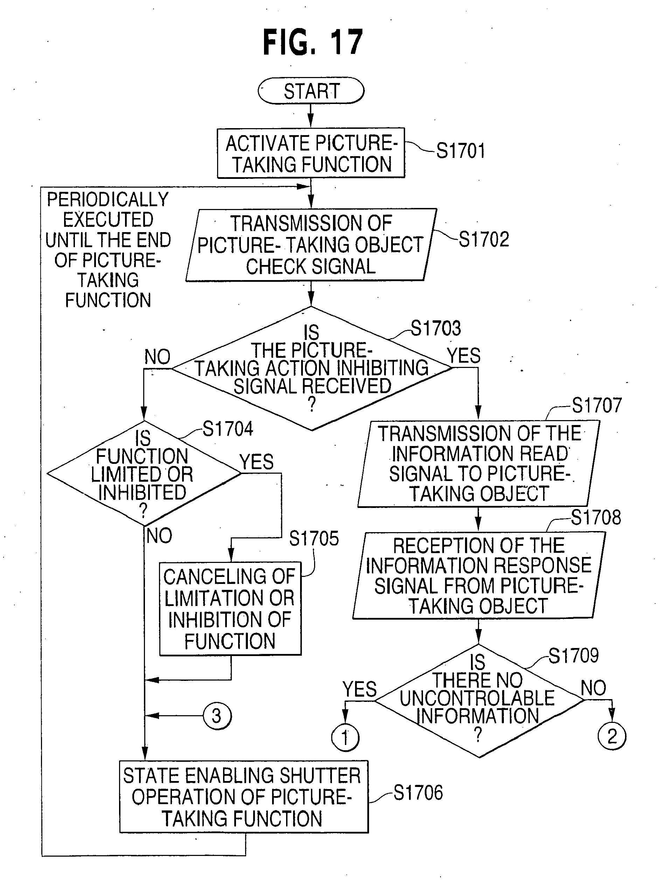

Next, operations of the control application of the information processing apparatus having the picture-taking function will be explained with reference to the flowchart of FIG. 17.

The mobile phone with a camera activates the picture-taking function to take a picture of the picture-taking object on which the wireless IC tag setting the customizing information is adhered (step S1701).

Whether the picture-taking action inhibiting signal is received or not is determined by transmitting the picture-taking object check signal (step S1703).

When the mobile phone with a camera has received the picture-taking action inhibiting signal, it transmits the information read signal to the picture-taking object (step S1707). Upon reception of the information response signal (step S1708), it is decided whether the information included in the response signal is formed of only the information which can be controlled with the present control application (step S1709).

When it is decided that the control is completely possible, a message for urging a person who desires taking of picture to accept the limitation and inhibition items set to the wireless IC tag is displayed on the display block (step S1710).

The person who desires to take a picture inputs the decision. It is decided whether the person who desires to take a picture accepts the limitation and inhibition items (step S1711). When it is decided that the person does not accept limitation and inhibition items, the picture-taking action is completed (step S1712). Moreover, when it is decided that the person accepts the limitation and inhibition items, picture-taking action is enabled (step S1706) through implementation of the limitation and inhibition of the designated function (step S1713).

On the other hand, when the information which cannot be controlled with the present control application may be detected, a message for notifying the necessity of updating of the control application is displayed on the display block (step S1714). Moreover, a message urging the person who desires to take a picture to download the update of the control application is also displayed (step S1715). The notifying message and deciding message may be summarized as one message or may be separated into two messages.

When the person who desires to take a picture has decided not to implement downloading of the update of the control application, the picture-taking action is inhibited (step S1716) from completing the picture-taking function (step S1717).

Moreover, when the person who desires to take a picture has decided to implement downloading of the update, the updated control application is downloaded using the communication block (step S1718).

Thereafter, the picture-taking function is activated again, as required, by displaying the message for urging re-activation of the picture-taking function (step S1719). With the reactivated picture-taking function, the control operation is executed from the step S1301 to process the relevant control and inhibition items.

The message to be displayed may be formed of only wording or a mark. Otherwise, it is also possible to form such message with both wording and a mark.

Moreover, the communication means for downloading the control application may be realized with a wireless communication or with a wired communication by connecting a personal computer as a server using a cable.

Embodiments of the present invention also realize, for example, the following services.

The administrator of the wireless IC tag sets, as the customizing information, the picture-taking inhibiting and limiting information. As the picture-taking limiting and inhibiting items, validation/invalidation of picture-taking action itself (shutter manipulation), validation/ invalidation of the zooming function, and validation/invalidation of the flash function can be set. The information processing apparatus having the picture-taking function is provided with the function to instruct the corresponding inhibition and limitation items of the picture-taking function to the picture-taking function.

Accordingly, at the time of taking a picture of the object on which the wireless IC tag setting the customizing information for the picture-taking function is adhered, the picture-taking action is executed by reading the information of the wireless IC tag by the control block of the information processing apparatus having the picture-taking function and setting the limitation and inhibition items. For example, when a painted-picture is selected as the picture-taking object, the flash function of the information processing apparatus having the picture-taking function can be inhibited when the administrator adheres, to the painted-picture, the wireless IC tag to which the flash function inhibiting information is set.

The wireless IC tag administrator sets, as the customizing information, the limiting information for storage and transfer of the taken pictures. As the limiting information for the storage and transfer of the taken pictures, permission/inhibition of storage to the memory block of the information processing apparatus having the picture-taking function, permission/inhibition of storage to an external memory with the communication means, permission/inhibition of transfer with the communication means, and permission/ inhibition of recording of voices can be set.

The information processing apparatus having picture-taking function is also provided with a function for instructing the corresponding inhibition and limitation items to the memory block and a function for instructing the corresponding inhibition and limitation items to the communication block.

Accordingly, at the time of taking a picture of the object to which the wireless IC tag, setting the customizing information for storage and transfer, is adhered, the picture-taking action can be executed by reading the wireless IC tag information with the control block of the information processing apparatus having a picture-taking function and setting the limitation and inhibition items. Moreover, credible control can also be executed by setting the limitation and inhibition information to the taken pictures.

The taken pictures can be protected from transfer to the other persons based on the mail function. Namely the taken pictures can be limited only to reproduction within the information processing apparatus having the picture-taking function when the administrator sets inhibition of transfer with the communication means to the wireless IC tag attached to the picture-taking object.

The wireless IC tag administrator sets the royalty for picture-taking as the customizing information. The information processing apparatus having picture-taking function is provided with a means for payment. Any means, when it can realize payment, may be used.

More practically, the payment can be realized by a payment that is made in addition to the telephone charge, or by a payment that is made electronically. Accordingly, at the time of taking pictures of the object to which the wireless IC tag, setting the customizing information for royalty, is adhered, the royalty for picture-taking action can be collected by reading the information of the wireless IC tag with the control block of the information processing apparatus having the picture-taking function and then checking whether the person who desires to take the pictures has paid the royalty. Moreover, the picture-taking action can be inhibited for the person who does not intend to pay the royalty.

The wireless IC administrator is capable of permitting the picture-taking action under the particular conditions, as the customizing information.

For example, the information for permitting picture-taking (picture-taking permitting information) is set as the service for the particular members. The wireless IC tag is provided with a function to receive the trying value information (access signal) for permission of picture-taking from the information processing apparatus having the picture-taking function, and compares this information with the picture-taking action permitting information explained above. The wireless IC tag transmits the responding signal for permitting or inhibiting the picture-taking action. Any type of picture-taking action permitting signal may be used, as long as it can be discriminated.

More practically, a password and an exclusive access code may be used. The information processing apparatus having the picture-taking function is also provided with a function to transmit the access signal and a function to permit the picture-taking action, when the picture-taking action permitting signal is received, or to inhibit the picture-taking action, when the picture-taking action inhibiting signal is received.

Moreover, as a value transmitted with the access signal, a value inputted from the input block by a user of the information processing apparatus having the picture-taking function may be used, or the information stored previously in the memory block may also be used.

Accordingly, at the time of taking a picture of the object to which the wireless IC tag, setting the customizing information for requesting input of the permitting conditions, is adhered, the picture-taking action can be permitted only to the authorized persons by reading the wireless IC tag information with the control block of the information processing apparatus having the picture-taking function and by checking the input of the picture-taking action permitting conditions to the authorized persons.

The wireless IC tag administrator sets, as the customizing information, the information for limiting the number of pictures to be taken. The wireless IC tag is also provided with a domain for storing the present permitted picture number information and a function to receive the signal for checking whether permission of picture-taking action (picture-taking inquiry signal) is received, to compare the limited number of pictures with the present picture number information, and to transmit the signal for providing permission or inhibition of the subsequent picture-taking action.

Moreover, the wireless IC tag is also provided with a function to update the present picture number information when the information processing apparatus having the picture-taking function, which has received the picture-taking action permitting signal, has additionally received the signal to notify the completion of picture-taking action (picture-taking action completing signal). Here, transmission of a response signal to the picture-taking action completing signal is not always required.

The information processing apparatus having picture-taking function is also provided with a function to transmit the picture-taking action inquiry signal and also to transmit the picture-taking action completing signal after implementation of the picture-taking action when the picture-taking action permitting signal is received.

Moreover, the information processing apparatus having the picture-taking function is also provided with a function to transmit the picture-taking action inquiry signal and to inhibit the picture-taking action when the picture-taking action inhibiting signal is received.

Accordingly, each time the information processing apparatus having the picture-taking function takes a picture, the wireless IC tag transmits the picture-taking action permitting signal until the picture number reaches the limited picture number. The number of pictures taken of the object to which the wireless IC tag is adhered is recorded by the wireless IC tag and increases when a picture is taken.

When the number of pictures reaches the limited picture number, subsequent picture-taking action exceeding the limited picture number is inhibited because the picture-taking action inhibiting signal is transmitted when the information processing apparatus having picture-taking function tries implementing the picture-taking action.

Such customizing information may be set individually or may be set at the same time.

Although a few embodiments of the present invention have been shown and described, it would be appreciated by those skilled in the art that changes may be made in these embodiments without departing from the principles and spirit of the invention, the scope which is defined in the claims and their equivalents.

The many features and advantages of the invention are apparent from the detailed specification and, thus, it is intended by the appended claims to cover all such features and advantages of the invention that fall within the true spirit and scope of the invention. Further, since numerous modifications and changes will readily occur to those skilled in the art, it is not desired to limit the invention to the exact construction and operation illustrated and described, and accordingly all suitable modifications and equivalents may be resorted to, falling within the scope of the invention.

## Claims

1. An information processing apparatus, including a picture-taking function, capable of taking a picture of an object on which a wireless IC tag is loaded, comprising:
a picture-taking object check signal generating unit generating, to the wireless IC tag, a picture-taking object check signal checking whether the wireless IC tag is loaded on the picture-taking object when the picture-taking function operates;
a signal transmitting/receiving unit receiving a response signal from the wireless IC tag, in response to the picture-taking object check signal; and
a control unit controlling the picture-taking function on the basis of the received response signal.

2. The information processing apparatus according to claim 1, wherein the control unit inhibits the picture-taking function when the received response signal is a picture-taking action inhibiting signal.

3. The information processing apparatus according to claim 1 or 2, further comprising a data updating signal generating unit generating a data updating signal to update the data transmitted to the wireless IC tag when the response signal is received, wherein the control unit controls the picture-taking function on the basis of a data update response signal when the signal transmitting/receiving unit receives the data update response signal

4. The information processing apparatus according to claim 3, wherein when the received response signal is the picture-taking action inhibiting signal, the data updating signal generating unit generates the data updating signal canceling inhibition of the picture-taking action.

5. The information processing apparatus according to claim 3, wherein when the received response signal is the picture-taking action permitting signal, the data updating signal generating unit generates the data updating signal inhibiting the picture-taking action.

6. The information processing apparatus according to any preceding claim, wherein the signal transmitting/receiving unit comprises a directional antenna to limit the direction from which radio waves are received.

7. An information processing apparatus including a picture-taking function, capable of taking a picture of an object on which a wireless IC tag is loaded, comprising:
a picture-taking object check signal generating unit generating, when the picture-taking function is activated, a picture-taking object check signal checking whether the wireless IC tag is loaded on the picture-taking object;
a signal transmitting/receiving unit transmitting a picture-taking object check signal and receiving a response signal from the wireless IC tag;
a response time measuring unit measuring a response time between transmission of the picture-taking object check signal and reception of the response signal;
a distance calculating unit calculating a distance between the wireless IC tag and the information processing apparatus, on the basis of the response time; and
a control unit comparing the distance calculated with the distance calculating unit with a picture-taking action limiting distance of the wireless IC tag, and controllably permitting the picture-taking function when the distance is larger than the picture-taking action limiting distance and controllably inhibiting the picture-taking function when the distance is smaller than the picture-taking action limiting distance.

8. The information processing apparatus according to claim 7, wherein operation of a zooming function is controllably inhibited when it is decided, in the control unit, that the distance is longer than the picture-taking action limiting distance and a difference between the distance and the picture-taking action limiting distance is smaller than the predetermined threshold value.

9. A wireless IC tag enabling communication by radio with an information processing apparatus including a picture-taking function, comprising:
a signal transmitting/receiving unit receiving, from the information processing apparatus, a picture-taking object check signal checking whether the wireless IC tag is loaded on a picture-taking object; and
a response signal generating unit generating a response signal to control operation of the picture-taking action of the information processing apparatus when the picture-taking object check signal is received.

10. The wireless IC tag according to claim 9, wherein the response signal generating unit generates a picture-taking action inhibiting signal inhibiting the picture-taking action of the information processing apparatus.

11. The wireless IC tag according to claim 9 or 10, further comprising an information processing apparatus authenticating unit determining whether a legitimate data update signal has been received from the information processing apparatus.

12. An illegal picture-taking preventing method controlling picture-taking of an object on which a wireless IC tag is loaded, comprising:
activating a picture-taking function to take a picture of said object;
generating a picture-taking object check signal checking whether the wireless IC tag is loaded on the picture-taking object;
transmitting the picture-taking object check signal; and
controlling the picture-taking function on the basis of a received response signal.

13. An illegal picture-taking preventing method controlling picture-taking of an object on which a wireless IC tag is loaded, comprising:
activating a picture-taking function for taking a picture of the object;
generating a picture-taking object check signal checking whether the wireless IC tag is loaded on the picture-taking object;
transmitting the picture-taking object check signal;
measuring a response time between transmission of the picture-taking object check signal and reception of the response signal;
calculating a distance between the wireless IC tag and the information processing apparatus on the basis of the response time; and
comparing the distance with a picture-taking limiting distance of the wireless IC tag and controllably permitting the picture-taking function when the distance is larger than the picture-taking limiting distance, and controllably inhibiting the picture-taking function when the distance is smaller than the picture-taking limiting distance.

14. A computer readable storage medium storing an illegal picture-taking preventing program causing a computer to control picture-taking of an object on which a wireless IC tag is loaded, by:
activating a picture-taking function to take a picture of the object;
generating a picture-taking object check signal to check whether the wireless IC tag is loaded on the picture-taking object;
transmitting the picture-taking object check signal; and
controlling the picture-taking function on the basis of a received response signal.

15. A computer readable storage medium storing an illegal picture-taking preventing program causing the computer to control picture-taking of an object on which a wireless IC tag is loaded, by: activating the picture-taking function;
generating a picture-taking object check signal checking whether the wireless IC tag is loaded on the picture-taking object;
transmitting the picture-taking object check signal;
measuring the response time between transmission of the picture-taking object check signal and reception of the response signal;
calculating a distance between the wireless IC tag and the information processing apparatus on the basis of the response time; and
comparing the distance with a picture-taking limiting distance of the wireless IC tag, and controllably permitting the picture-taking function when the distance is larger than the picture-taking limiting distance, and controllably inhibiting the picture-taking function when the distance is smaller than the picture-taking limiting distance.
